# EUROPEAN PATENT APPLICATION

(11) **EP 2 206 834 A1**
(43) Date of publication of application: **14.07.2010**
(21) Application number: 10150342.3
(22) Date of filing: 08.01.2010
(51) Int. Cl.: E01F 9/017, B29B 17/00, B29B 17/04, E01C 11/22

(54) **Articles produced from used tyres and method for manufacturing said articles**

(30) Priority: 08.01.2009 IE 20090017
(71) Applicant: Seryt Eco Products Ltd., Limerick (IE)
(72) Inventor: Keane, Michael, County Tipperary (IE); Blair, Eamonn, 2, Dublin (IE)
(74) Representative: Walsh, Marie Goretti

(57) **Abstract**

The invention provides articles produced from used tyres and a method for manufacturing said articles. In one embodiment, there is provided a resilient support post for use on a roadside, footpath or interior/ exterior walkway comprising a support body having a base section and a display section, the base section comprising means for use in securing the support in place, the display section mounting a display unit wherein the support body comprises a plurality of layers, each layer comprising a section of tread and underlying carcass of a tyre. In other embodiments of the invention, the articles comprise kerbing elements and a speed ramp, articles of street furniture and pallets. A weather-resistant coating is applied to the manufactured article.

## Description

The present invention relates to articles produced from used vehicle tyres and to a method for manufacturing said articles.

In one embodiment of the present invention, an article produced from used tyres comprises a flexible support post for use on roadside, footpaths, interior or exterior walkways or other areas subject to traffic. The flexible support post comprises a support body having a base section and a display section, the base section comprising means for use in securing the support in place, the display section mounting a display unit. Such supports, mounting reflective elements, are often placed along a roadside to aid in delineating the roadway.

In other embodiments of the present invention, the articles produced from tyres include a kerbing element, a speed ramp, articles of street furniture and/or a pallet.

### BACKGROUND

US Patent Specification No. US2005/0036833 (and corresponding European Patent Application No. EP0817890) disclose a road marker post having a visual display in the form of a reflector or other road indicating indicia, the road marker post being formed from a lightweight material and comprising:
i. a body section which carries the visual display; and
ii. a support member for supporting the body section, the support member comprising a means for anchoring the road marker post to a ground surface and a resilient section connected to the body section and to the anchoring means, the resilient section being adapted to move in response to contact of a moving vehicle with the body section to allow the body section to deflect from the path of movement of the vehicle and being adapted to return the body section to its original position following the contact, the resilient section being formed from a plurality of elongate generally rectangular planar members arranged side by side and bonded together by adhesive, with each planar member comprising at least part of the tread and underlying carcass of a motor vehicle tyre.

In this disclosure, the resilient section is embedded into the ground and consists of only two planar members of tyre strips adhered together. The specification US 2005/0036833 discloses that "in this connection, the applicant [of US 2005/0036833] has found that there is an increasing tendency for the resilient section to delaminate as the number of planar members increases". This has the disadvantage of limiting the number of strips of used tyres that can be used to make the resilient portion of the road marker post. Hence this limits the volume of used tyres that can be recycled by producing the road marker post of US 2005/0036833.

Furthermore, known processes for recycling used vehicle tyres generally involve having to remove the reinforcing means (usually steel wire) from the tyre and break down the tyre into a particulate material of small particle size known as "crumb".

International Patent Publication No. WO 2005/26443 discloses a structure for anti-noise barriers for roads and high-speed multilane motorways, consisting of a conglomerate of used tyres, ground together with their inner wires, and applied onto a metal framework of inner support, which may be reinforcing iron rods. The structure may be covered with an anti-sound enamel so as to absorb acoustic vibrations even of great intensity, as the structure itself and the features of the molecule layers forming the conglomerate prevent the transfer of vibration from one granule to the other.

Japanese Patent Publication No. JP 2002/004536 discloses a construction material for a building such as a wall material, a ceiling material, etc. by combining a gypsum material with the minute fragments and powdery matter obtained by cutting a used tyre adopted as a recycled material and covering the combined material taken as a core with a plate-like object. The construction material using the discarded used tyre, etc., as a recyclable resource is constituted as follows: the minute fragments and/or powdery matter obtained by cutting the used tyre are bound with gypsum to be formed into a layered material, which is taken as the core and covered with the plate-like object. Alternatively, the above minute fragments and/or the above powdery matter are fixed by means of an adhesive to be formed into the layered material, wherein both surfaces of a gypsum plate disposed in its front surface are covered with the plate-like object.

International Patent Publication No. WO 9947326 pertains to the field of techniques for recycling industrial waste and more precisely relates to techniques for recycling used tyres. The aim in the disclosure of WO 9947326 is to increase the volumetric compacting density of the materials to be recycled, i.e. the rubber and metallic cord, during the transportation and recycling processes of used tyres. To this end, the method of WO 9947326 first comprises separating the tyres into tread and side-wall portions. The tread portions of the tyres are cut in the radial plane and wound into a spiral-shaped strip. In one aspect of this method, the spiral-shaped strip comprises a plurality of tread portions which are sequentially wound one after the other. In another aspect of the disclosed method, the side-wall portions are arranged one onto the other with the convex part on the same side so as to form a pack in the shape of a cylindrical ring.

European Patent Specification No. 669292 discloses that for recycling used tyres, after shredding, the material is used as a bulking material for concrete products for construction and concrete building components, highways, insulation against heat and noise.

Belgian Patent Specification No. 1007239 relates to the use of used tyres. The tyres are incorporated in sound-proofing enclosures. Tyres are cut into two in the direction of the diameter and tyres so cut are placed with their internal surface turned towards the noise source or sources.

With regard to background to the particular embodiment comprising a resilient support post, most people are familiar with the roadside delineator posts that are often positioned along the side of a road. The posts are positioned every few metres and are generally fitted with reflective elements. As a car drives along the road in the dark, the light from the headlights of the car is reflected by the reflective elements on the roadside posts, helping the motorist identify the side of the road, which might otherwise not be clearly identifiable.

Such posts come in two main types, namely, polycarbonate posts or polyvinyl chloride (PVC) posts, both of which have a number of disadvantages associated therewith. The polycarbonate post is rigid and will often break or shatter if struck by a passing vehicle, often damaging the vehicle that has struck it. Furthermore, it the post is struck with sufficient force, it can become a projectile and, due to its inherent sharp edge, can be dangerous if it comes in contact with nearby objects or people. The PVC post is flexible and will not generally break if struck by a passing vehicle but will simply bend under the force of the vehicle. Unfortunately, while the known PVC posts will bend under the weight of a striking vehicle, they do not return to an upright position, thereby causing them to no longer function in the desired manner. Both PVC and polycarbonate posts do become weather worn after a period of time. PVC posts in particular can weather and over many months of light, can become brittle. UV light can cause surface degradation of PVC causing colour loss, surface roughness and dirt pick-up. This can cause an otherwise white post be become off-white and discoloured.

Once a post has been dislodged from its upright position, either it is has been broken or if it has simply been deformed, it will no longer function according to its purpose, namely providing a support for a display unit at the side of the road. There will therefore be at least one missing display element such as a reflective element along a stretch of road, which increases the danger of driving along that road at night. It is therefore necessary to replace the non-functioning post. This is a costly and inconvenient exercise as a crew of workmen must be deployed to the roadside to carry out the replacements. This work is hazardous to both workmen and drivers and commonly causes traffic delays or diversions in the area in which the work is being carried out.

Polycarbonate and PVC posts can also be subjected to damage and theft of the reflective elements on the posts. Loss of the reflective elements on the post renders the post useless as a safety device.

Referring now to the other embodiments of the present invention, particularly the kerbing element, kerbstones are traditionally made from materials such as concrete which offers little, if any, resilience against collisions between motor vehicle bumpers or wheels and the concrete kerbing. Hence, the prior art concrete kerb stones tend to become chipped with portions of concrete being knocked off the kerb stone as a result of such collisions. Also the concrete kerb stones can become blackened in places from collisions with moving motor vehicle tyres which scrape off or collide with the concrete kerbing.

The present invention seeks to alleviate the above identified disadvantages associated with the prior art.

Thus, it is an object of the present invention to provide a process for recycling used tyre that overcomes at least some of the above-mentioned problems. It is a further object of the invention to provide articles including a resilient support post, a kerbing element, speed ramp, street furniture, pallets and other articles that are relatively easy to manufacture and can be manufactured from used vehicle tyres.

### STATEMENTS OF INVENTION

Accordingly, the present invention provides an article produced from used vehicle tyres, the article comprising a plurality of layers, each layer comprising a section of tread and underlying carcass of a tyre, the layers being connected together by connecting means and the article includes an outer coating which is weather and abrasion resistant.

Most tyres comprise a reinforcing means such as belting inlaid in the tyre material below the tread as a reinforcing means. In general, this inlaid belting is usually formed of a metal such as steel in the form of steel wires, but other materials such as nylon may also be used. During the process for manufacturing the articles of the invention, these reinforced steel wires are cut when the used tyre is cut to produce elongate strips of tyre. The cut steel wires tend to protrude from the cut tyre strips as jagged edges which would be hazardous for users. The inclusion of the coating in the articles of the present invention prevents the steel wires from protruding proud of the surface of the manufactured article. Hence, the articles of the present invention have the further advantage that the reinforcing steel wires do not have to be removed from the used tyres before being used to manufacture the articles. In fact, being able to use the steel wires included in the articles gives the manufactured articles of the present invention added strength and the inclusion of the coating on the articles of the invention prevents the steel wires from protruding from the surface of the manufactured articles and hence present no hazard for users. The addition of the coating also provides protection to these steel wires which would otherwise rust when exposed to water and air.

Preferably, the coating is based on an isocyanate resin; or an isocyanate resin with a polyester polyol or polyether polyol.

Thus, the manufactured article is coated with a weather and abrasion resistant coating which may be based on an isocyanate alone (one part system as termed in the art of coatings) or the coating may be based on an isocyanate resin with a polyester or polyether polyol ( referred to, in the art, as a two-part coating). The coating may include a pigment.

If polyols are used in the coating, the polyols in the coating composition may comprise polyester polyols or polyether polyols, used separately or blended.

The isocyanate may comprise polymeric diphenylmethane-4-4 Diisocyanate. Other, non-exhaustive, organic polyisocyanates which can be used in the present invention include hexamethylene Diisocyanate, polymethylene polyphenyl isocyanate, m-phenylene Diisocyanate, p-phenylene Diisocyanate, 3,3-dimethyl -4-4 diphenyl Diisocyanate, 3,3-dimethoxy-4-4 biphenylene Diisocyanate, 2-2,4-4 tetramethyl-4-4 biphenylene Diisocyanate, 3,3-dimethyl-4-4 diphenylamine Diisocyanate, 4'4-diphenyl isopropylidene Diisocyanate, 1'5-naphthylene Diisocyanate and polymethylene polyphenyl isocyanate.

Preferably the isocyanate is included in the coating formulation in an amount between 98.6% w/w and 99.7% w/w of the formulation.

Conveniently, the coating formulation may include water ideally within the range 0.2-0.9% w/w of the coating formulation.

The coating formulation may also include an organo tin catalyst which comprises, for example, Dibutyl Tin dilaurate, preferably in an amount between 0.1 and 0.5% w/w.

In an alternative embodiment, the coating formulation includes rubber crumb preferably of a particle size between 1 mm to 3mm and preferably in an amount in the range of 85-95% w/w of the formulation.

In this alternative embodiment, the isocyanate is preferably present in an amount between 2 and 5% w/w and may also include pigment in an amount between 3 to 10%.

Advantageously, the connecting means comprises an adhesive. The preferred adhesive for use in the present invention comprises an anaerobic adhesive having a viscosity of 1000 to 1200 Centipoise (cps). It has been found through experiment that an adhesive within this viscosity range will not flow uncontrollably and has excellent gap filling properties. This property is particularly advantageous when processing tyres of unequal thickness.

The adhesive may be conveniently applied by brushing, dipping into a reservoir of adhesive or by spraying the adhesive.

The plurality of layers may comprise two layers but preferably includes more than two layers. This is especially the case for the kerbing elements of the present invention in which several layers of elongate strips of used tyres can be recycled/re-used in producing a useful article, in this case, the kerbing elements. This has the advantage of maximising the number/volume of used tyres and hence maximises the recycling of used tyres.

Another advantage of the kerbing element of the present invention is that it is significantly lighter than an equivalent concrete kerb and therefore poses less risk of injury for those manually handling the units. Similarly the transportation costs shall be less due to the lighter weight.

Advantageously, the steel which is included in used vehicle tyres does not need to be removed from the tyre before the tyre can be processed to form a useful article. This is a significant advantage over the prior art which required that recycling tyres involved removal of the steel and/or formation of ground particles of rubber or "crumb".

The articles provided by the present invention include a flexible support post, kerbing elements, a speed ramp, articles of street furniture (for example, a bench) and pallets.

In one embodiment of the present invention, the article is provided in the form of a resilient support post for use on a roadside, footpath or interior/ exterior walkway comprising a support body having a base section and a display section, the base section comprising means for use in securing the support in place, the display section mounting a display unit **characterized in that** the support body comprises a plurality of layers, each layer comprising a section of tread and underlying carcass of a tyre.

Thus, using the process of the invention, in this embodiment, a very reliable resilient support post is produced. The layers of tread and underlying carcass of tyre, together with the coating of the present invention, provide a post that is strong enough to stand upright without need for further support elements and yet is flexible enough to not break on impact with a vehicle or other object. Additionally, the tyre material is sufficiently resilient to allow the post to bend over, if struck or pushed, but to return to its upright position once the disturbing force is removed.

Furthermore, the raw materials used to produce the articles of the present invention are readily available in the form of waste tyres. In fact, given the difficulty in disposing of waste tyres, it is particularly advantageous to use them in the manufacture of another useful product.

In another embodiment of the invention, resilient kerbing elements are produced. The kerbing elements are formed in the precise dimensions of existing standard concrete full-battered, half-battered or bull-nosed kerbstones. The kerbing elements of the present invention can be formed chamfered, radiused and/or as splayed kerbing elements or with flanges so that the kerbing elements are formed so as to be able to replace existing concrete kerbstones.

Thus, using the process of the invention, articles in this embodiment, in the form of very reliable resilient kerbing elements are produced. The layers of tread and underlying carcass of tyre, together with the coating, provide a kerbing element that is strong enough to stand upright without need for further support elements and yet is flexible enough to not break on impact with a vehicle or other object. Additionally, the tyre material is sufficiently resilient to allow the kerbing element to recover from the force of a collision with a motor vehicle, when there is an impact from a motor vehicle.

In another embodiment of the invention, there is provided articles including a resilient support post, a kerbing element, articles of street furniture and a pallet in which the articles comprise at least two layers. This is a particularly efficient way of providing/producing these articles, as the plurality of layers supply strength and rigidity to the articles.

In a further embodiment of the invention, there is provided articles manufactured from used tyres in which the two layers engage each other such that the treads of each layer are in contact.

In a further embodiment of the invention, there is provided articles manufactured from used tyres in which the layers engage each other such that the treads and carcasses are in contact in varying combinations.

Alternatively, the articles may be formed such that the carcasses of each layer are in contact. In each of these embodiments, the curvature inherent to each layer of the tyre will counteract the curvature of another, thereby providing an upright article such as a straight support post.

In one embodiment of the invention, there is provided a resilient support post in which the base section comprises an aperture for engagement with a pin for fixing the support in the ground. In this way, a pin is fitted through the aperture in the post, the base section of the post can be fitted into wet concrete, such that when the concrete hardens the pin fitted through the aperture will prevent the post from being removed from its location.

The resilient support post may also include the display unit comprising a reflective element. This is a particularly efficient and useful type of display unit to be fitted to the post. Other possible display units comprise temporary or permanent signage, temporary or permanent lighting or other such items.

According to a further aspect of the invention, there is provided a method for manufacturing an article from a used tyre, the tyre comprising a circumferential carcass having a tread overlaid thereon and a sidewall projecting orthogonally from each side edge of the carcass, the method comprising the steps of:
removing the sidewalls of the tyre;
cutting the remaining tread and carcass into a one or more substantially rectangular sections, each having a tread side and a carcass side;
joining two substantially rectangular sections together in a layered manner; and
connecting the sections together to form the article; and
applying a weather and abrasion resistant coating to the outer surface of the article.

Preferably, the sections are connected together by adhering. The preferred adhesive for use in the present invention comprises an anaerobic adhesive having a viscosity of 1000 to 1200 Centipoise (cps). It has been found through experiment that an adhesive within this viscosity range will not flow uncontrollably and has excellent gap filling properties. This property is particularly advantageous when processing tyres of unequal thickness.

The process includes the step of coating the article with an outer coating which is weather and abrasion resistant and ideally this coating is based on an isocyanate resin or an isocyanate resin with a polyester polyol or polyether polyol.

Thus, the manufactured article is coated with a weather and abrasion resistant coating which may be based on an isocyanate alone (one part system as termed in the art of coatings) or the coating may be based on an isocyanate resin with a polyester or polyether polyol (referred to, in the art, as a two-part coating). The coating may include a pigment.

If polyols are used in the coating, the polyols in the coating composition may comprise polyester polyols or polyether polyols, used separately or blended.

The isocyanate may comprise polymeric diphenylmethane-4-4 Diisocyanate. Other, non-exhaustive, organic polyisocyanates which can be used in the present invention include hexamethylene Diisocyanate, polymethylene polyphenyl isocyanate, m-phenylene Diisocyanate, p-phenylene Diisocyanate, 3,3-dimethyl -4-4 diphenyl Diisocyanate, 3,3-dimethoxy-4-4 biphenylene Diisocyanate, 2-2,4-4 tetramethyl-4-4 biphenylene Diisocyanate, 3,3-dimethyl-4-4 diphenylamine Diisocyanate, 4'4-diphenyl isopropylidene Diisocyanate, 1'5-naphthylene Diisocyanate and polymethylene polyphenyl isocyanate.

Preferably the isocyanate is included in the coating formulation in an amount between 98.6% w/w and 99.7% w/w of the formulation.

Conveniently, the coating formulation may include water ideally within the range 0.2-0.9% w/w of the coating formulation.

The coating formulation may also include an organo tin catalyst which comprises, for example, Dibutyl Tin dilaurate.

In an alternative embodiment, the coating formulation includes rubber crumb preferably of a particle size between 1 mm to 3mm and preferably in an amount in the range of 85-95% w/w of the formulation.

In this alternative embodiment, the isocyanate is preferably present in an amount between 2 and 5% w/w and may also include pigment in an amount between 3 to 10%.

The coating may be brush or roller applied or by spray techniques. Another method of coating the manufactured article is by Reaction Injection Moulding (RIM). In this process, the manufactured article is inserted into a steel mould which is 5% larger than the manufactured article. The polyester or polyether coating is pumped in and allowed to react. The mould is opened and the article is removed. Articles thus obtained have a highly weather and abrasion coating.

Alternatively, the coating may also be applied by dipping or spraying techniques.

In one embodiment of the method of the present invention, the method is for producing a resilient support post and comprises the following additional steps:
forming a base section of the resilient support post such that it can be used in securing the support in place; and
affixing a display unit to the support.

Thus, in this way, in this particular embodiment, a resilient support post can be manufactured simply and efficiently from a raw material that is in plentiful supply. In other embodiments, this method of manufacturing produces a kerbing element, a speed ramp and many other articles such as street furniture and a pallet.

### DETAILED DESCRIPTION OF THE INVENTION

The invention will now be more clearly understood from the following description of an embodiment thereof given by way of example only with reference to the accompanying drawings in which:
Fig. 1 is a diagrammatic representation of the post according to the invention;
Fig. 2 is a diagrammatic representation of a section of tyre for use in the invention;
Fig. 3 is a diagrammatic representation of the tyre being processed according to the invention;
Fig. 4 is a diagrammatic representation of the post being manufactured according to the invention;
Fig. 5 is an elevation view of a post in one embodiment;
Fig. 5a is a sectional view along the line A-A of Fig. 5;
Fig. 5b is a sectional view along the line B-B of Fig. 5a;
Fig. 5c shows the same view as in Fig. 5b but with one layer pulled back for clarity;
Fig. 6 is a perspective view of a half batter kerbing element;
Fig. 6a is a sectional view along the line A-A of Fig. 6;
Fig. 7 is a perspective view of a full batter kerbing element;
Fig. 7a is a sectional view along the line A-A of Fig. 7;
Fig. 8 is a sectional view of a further alternative embodiment of the invention, comprising a speed ramp; and
Fig. 8a is a sectional view along the line A-A of Fig 8.

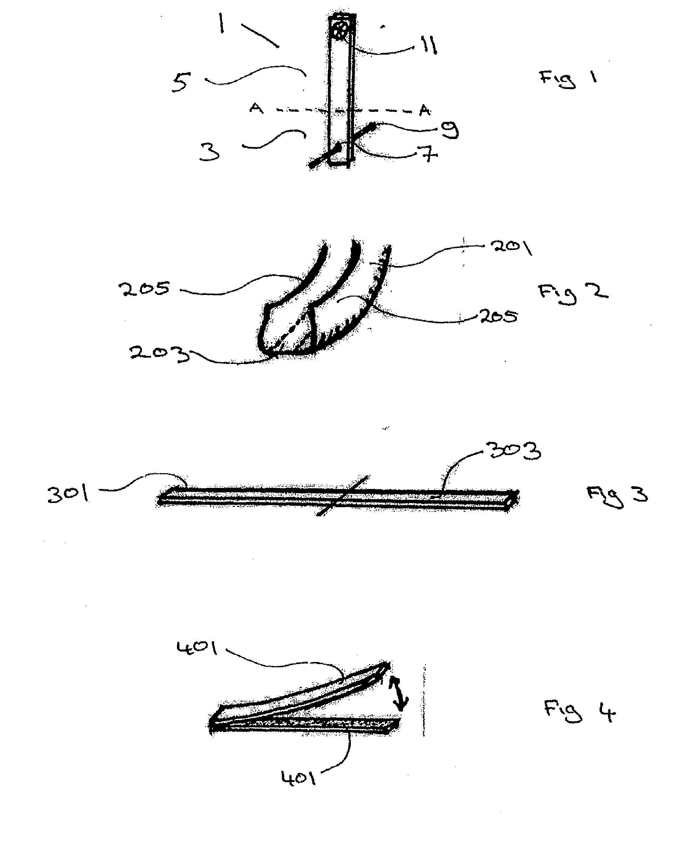

Referring to the drawings, and initially to Fig. 1 thereof, there is shown a substantially elongate rectangular resilient support post indicated generally by the reference numeral 1, comprising a base section 3 below the line AA and a display section 5 above the line AA. The base section 3 comprises an aperture 7 forming means for use in securing the support post in place. A pin 9 is fitted through the aperture 7. A display unit, in this case a reflective element 11 is mounted adjacent the top of the display section 3 of the support post 1.

In use, the pin 9 is fitted through the aperture 7 and the base section 5 of the post 1 is placed in a small, shallow pit filled with wet concrete. The concrete will harden around the pin, preventing the post from being removed from the pit and thus securing it in position.

Referring now to Fig. 2, in which like parts have been given the same reference numerals as before, there is shown a section of a waste tyre 201, the tyre comprising a circumferential carcass 203 having a tread (not shown) overlaid thereon and an sidewall 205 projecting orthogonally from each side edge of the carcass. In order to manufacture the post of the invention, the sidewalls 205 are removed leaving an elongate strip 301 of carcass and tread approximately 100mm wide and 2m in length. The strip comprises a carcass side 303 corresponding to the inside of the tyre and a tread side (not shown), corresponding to the outside of the tyre. The strip 301 is shown in Fig.3. The next step in the manufacture of the post is to cut the strip 301 in half so as to form two elongate, substantially rectangular strips 401, each approximately a metre in length and 100mm wide. Next, as shown in Fig. 4 the two strips are joined together along their lengths using adhesive, the tread side of the two strips 401 being joined together. In this way, the smooth carcass side 303 of the strips forms the surface of the post 1. Once the two strips have been joined together as per Fig. 4, the post is coated in a plastic or rubberised coating and a display unit such as a reflective element is attached.

The display unit may also take the form of a socket (not shown) or other form of attachments means to be used with temporary signage or the like. In such a case, where the post of the invention was to be in a temporary setting, alternative means for use in securing the support post in place may be used. For example, the base section of the post may comprise a stake that may simply be driven into ground.

It should be noted that, in use, the ability of the post to return to its upright position shall depend on the height, thickness and shape of the manufactured post for a given application.

The support post preferably comprises two layers or more formed from sections taken from one or more tyres, with the sections engaging such that possible variation of treads and carcasses of each layer are in contact and joined by adhesive. In this manner, a post of any thickness, shape and length can be manufactured by this process for differing uses as required. The layers can be alternatively lapped and joined by adhesive to provide any shape and length required.

It should be noted that the base of the post may differ depending on thickness, shape and length of the post and depending on exact application.

A further object of the present invention is to use the trimmed tyre pieces and wall of the tyre to create a crumb which can be mixed with an adhesive compound to form articles for a number of different applications.

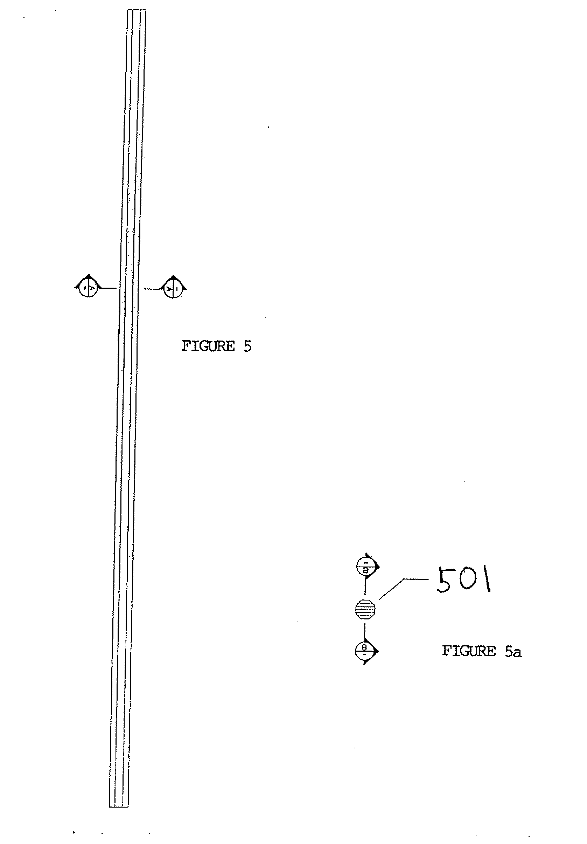

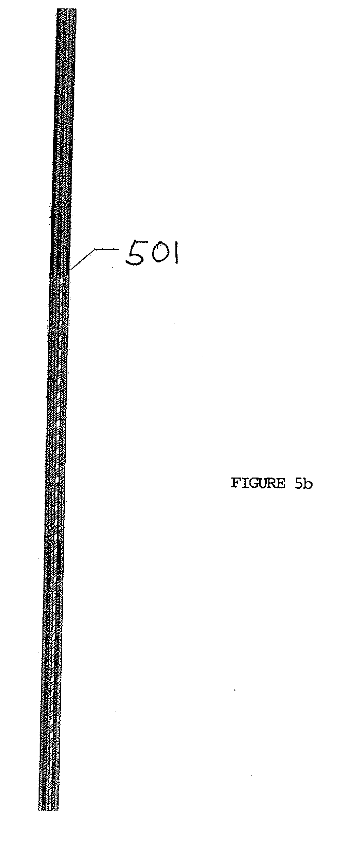

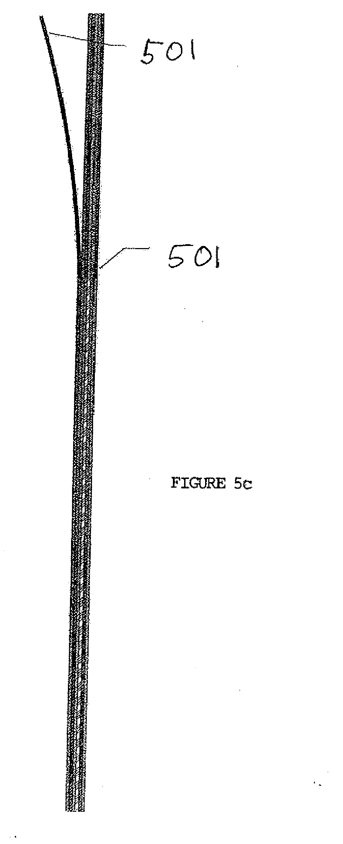

Referring now to Figs. 5, 5a, 5b and 5c, one embodiment of the present invention will be described, namely the resilient support post. Fig. 5 shows the elevation and section through a support post. The plurality of layers 501 of elongate strips of tyre can be seen in the sectional view in Fig. 5a. These layers 501 are joined by adhesive as will be described further hereinbelow.

Fig. 5b shows section B-B taken through the centre of the resilient support post. Fig. 5c shows the same section as in Fig. 5b but with one layer 501 of tyre section pulled back to clearly show the arrangement of layers forming the support post in this embodiment.

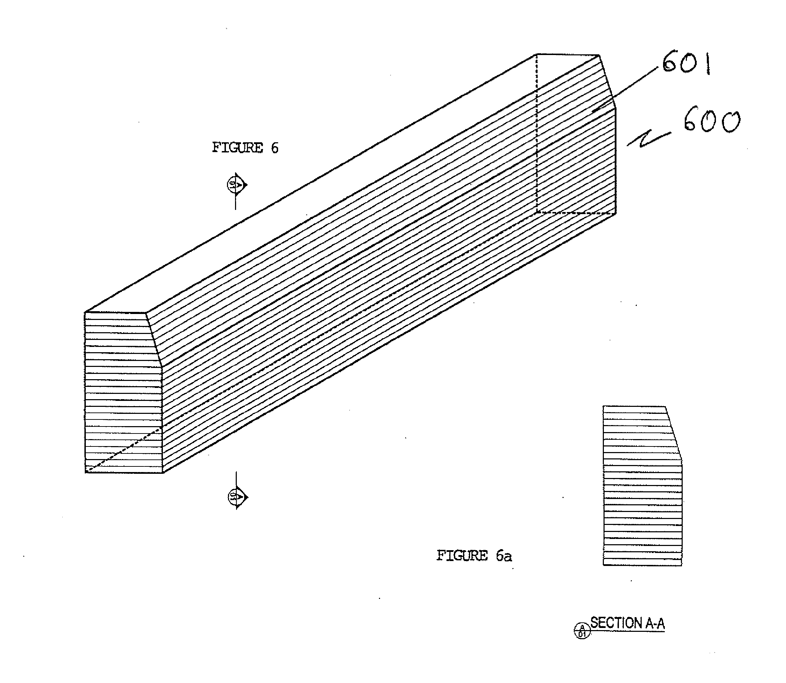

Figures 5, 5a, 5b, 5c and 6 show a resilient support post manufactured using the method of the invention. The resilient support post shown in this embodiment of the invention is approximately 3 metres in length, is octagonal in shape and approximately 75 millimetres in width. These dimensions are provided by way of example only and the posts or the method of manufacture thereof is not, in any way, restricted to these dimensions.

Tyre carcass layers from one or more tyres can be cut into differing lengths and lapped in alternating sections and joined by adhesive, in whatever pattern is required, to provide support posts of different shapes, thicknesses and lengths. The support posts can be also trimmed to provide whatever shape and thickness that is required.

It will be understood by the person skilled in the art that the definition of the support post of the invention as comprising a display section and base section relates to functional differentiation and not necessarily a physical differentiation. In general, the support post of the invention will comprise a unitary body, formed from a plurality of layers.

Referring now to Figs. 6 and 6a, an article in another embodiment of the invention will be described. The article in this embodiment takes the form of a kerbing element which is a half-batter kerb, indicated generally by the reference numeral 600. The half-batter kerb 600 comprises a plurality of strips 601 which can be connected to each other by pinning or stapling but preferably by using an adhesive.

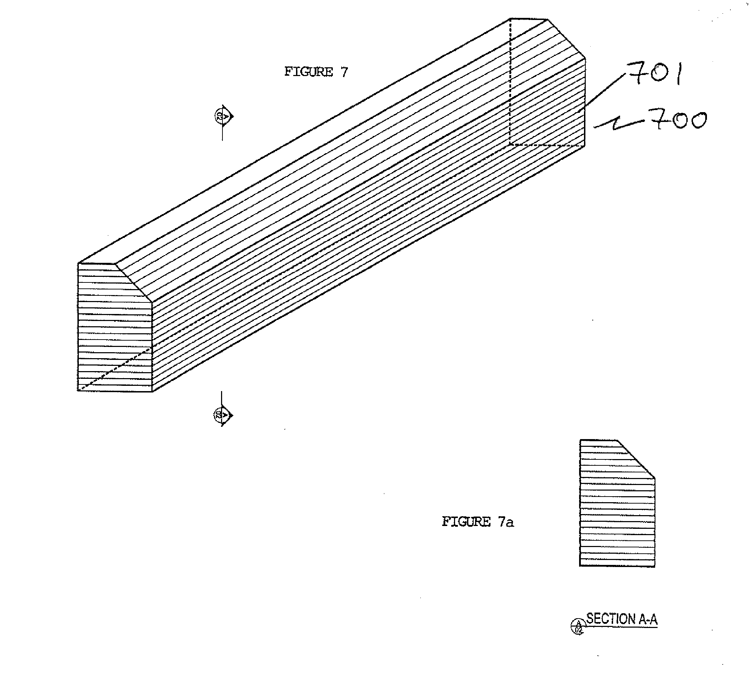

Referring now to Figs. 7 and 7a, an article in another embodiment of the invention will be described. The article in this embodiment takes the form of an alternative kerbing element which is a full-batter kerb, indicated generally by the reference numeral 700. The full-batter kerb 700 comprises a plurality of strips 701 which can be connected to each other by pinning or stapling but preferably by using an adhesive.

The kerbing elements 600 and 700 are formed in the precise dimensions of existing standard concrete full-batter kerbstones or half-batter kerbstones. The kerbing elements of the present invention can be formed chamfered, radiused and/or as splayed kerbing elements or with flanges so that the kerbing elements are formed so as to be able to replace existing concrete kerbstones.

It will be understood that the above kerbing elements, i.e. the half batter kerb and the full batter kerb, are merely described as examples, and that many different kerbing elements can be produced in accordance with the present invention. The kerbing elements are produced in the precise dimensions of the existing kerbstones defined by European standard prEN1340.

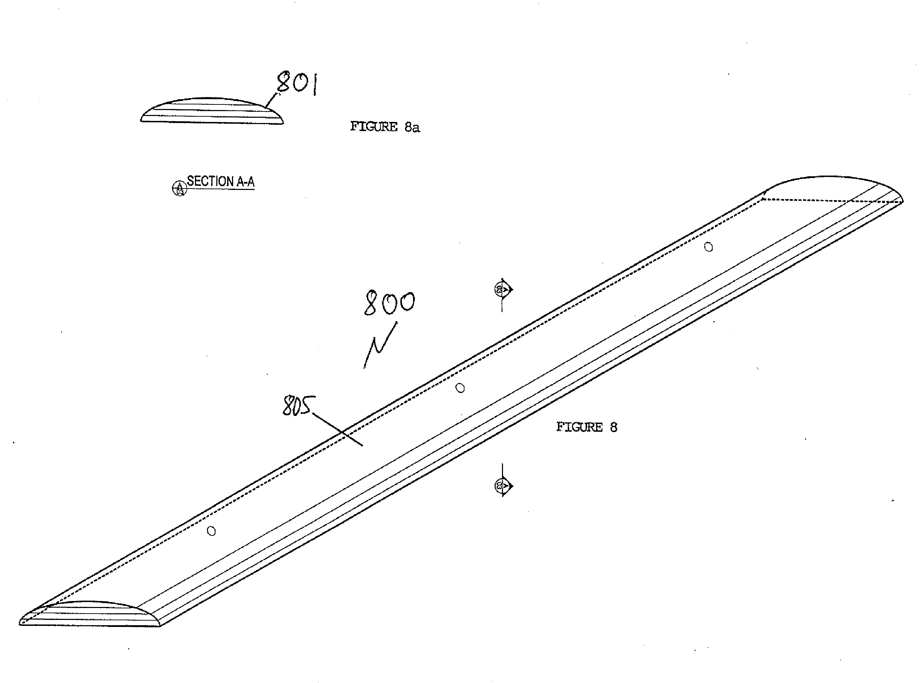

Referring now to Figs. 8 and 8a, an article in another embodiment of the invention will be described. The article in this embodiment takes the form of a speed ramp which is indicated generally by the reference numeral 800. The speed ramp 800 comprises a plurality of strips 801 which are connected to each other by pinning or stapling but preferably by using an adhesive. A fixing location 805 is also indicated in Figures 8 and 8a.

It will be understood that any dimensions referenced herein are merely used as an example and the dimensions of any article produced can be achieved by trimming the layer or layers of tyre back to the required shape.

### MANUFACTURING PROCESS FOR PRODUCING ARTICLES FROM USED VEHICLE TYRES

The preferred process for manufacturing the posts, kerbing and speed ramps of the invention will now be described.
1. Both sidewalls of the tyre are removed using an industrial cutting tool commonly used in the industry.
2. The rubber ring so obtained by having cut away the sidewalls, is cut once thereby forming an elongate threaded rubber strip. The threaded rubber piece is laid flat on a bench.
3. The elongate rubber strip is sanded with P40 or P60 sandpaper. The rubber strip may also be abraded mechanically with a wire brush or alternative abrasive surface so as to improve the adhesion between rubber strips after the adhesive has been applied.
4. The elongate rubber strip is cleaned by using solvent, preferably, wiping the surface using a solvent. This is an important step as the removal of dirt, oil and other surface contaminants is vital to ensure excellent adhesion between the rubber layers. The preferred solvent for degreasing is Toluene.
5. Two substantially flat rectangular rubber sections are bonded together in a layered manner. The bonding process is carried out by applying a thin layer of adhesive to a surface of one flat elongate rubber strip section and applying a second flat, elongate rubber section onto the wet adhesive. The laminate is clamped or pressed together as required. During this process, the adhesive crosslinks and causes the two elongate rubber sections to bond to each other. The preferred adhesive for use in the proposed invention is an anaerobic adhesive having a viscosity of 1000 to 1200 Centipoise (cps). It has been found through experiment that an adhesive within this viscosity range will not flow uncontrollably and has excellent gap filling properties. This property is particularly useful when processing tyres of unequal thickness. The laminate can thus be constructed with as many layers of elongate rubber strip sections as is required. Depending on the article being manufactured and the use to which it will be put, the number of layers may vary.
6. If this manufacturing process is being operated to manufacture a resilient support post, then a base section will also be manufactured for the resilient support post for use in securing the support post in place.
7. The manufactured article obtained after the above steps is sanded and cut to remove any rough edges of loosely adhering rubber or protruding wire pieces.
8. After the strips of tyre rubber have been laminated together, the article produced can be made weather resistant and can be resistant to common chemicals and chemicals used in road treatment.
   This protection may be achieved in a number of ways including:
   A. Coating the item with a coating e.g. a paint coating; and/or
   B. Encapsulating the article with a crumb rubber. This encapsulation can be achieved by, for example, a modified Reaction In Mould (RIM) process.
   The coating of the article is described in detail in Example 1 below and encapsulation of the article is described in detail in Example 2 below.
   Thus, in one embodiment of the process, the manufactured article can be coated with a pigmented, weather and abrasion resistant coating based on an isocyanate resin alone (one part system as it is referred to in the art of coatings) or alternatively, in another embodiment, the coating can be based on a polyester or polyether polyol mixed with an isocyanate (such a system is termed a two-part system in the art of coatings).
   The isocyanate-based coating may comprise polymeric diphenylmethane-4-4 Diisocyanate. Other organic polyisocyanates which could be used in the invention include hexamethylene Diisocyanate, polymethylene polyphenyl isocyanate, m-phenylene Diisocyanate, p-phenylene Diisocyanate, 3,3-dimethyl -4-4 diphenyl Diisocyanate, 3,3-dimethoxy-4-4 biphenylene Diisocyanate, 2-2,4-4 tetramethyl-4-4 biphenylene Diisocyanate, 3,3-dimethyl-4-4 diphenylamine Diisocyanate, 4'4-diphenyl isopropylidene Diisocyanate, 1'5-naphthylene Diisocyanate and polymethylene polyphenyl isocyanate.
   If a coating including polyols is used, then the polyols in the coating composition may comprise polyester polyols or polyether polyols, used separately or blended.
9. The coating may be brush or roller applied. Alternatively, the coating may also be applied by dipping or spraying techniques. Another method of coating the manufactured article is by Reaction Injection Moulding (RIM). In this process, the manufactured article is inserted into a steel mould which is 5% larger than the manufactured article. The polyester or polyether coating is pumped in and allowed to react for six to ten minutes. The mould is opened and the article is removed. Articles thus obtained have a highly weather and abrasion coating.

It is also possible to use the sidewalls of the tyres to produce a crumb. The side walls of the tyres may be crumbed to a particle size of 1 mm to 4 mm for example. This crumb may be mixed with the polyester or polyether polyol. A typical mixture may comprise of 60 parts crumb rubber and 10 parts polyester or polyether polyol and optionally contain water. This mixture may vary and may be pigmented with organic, inorganic, fluorescent or phosphorescent pigments, and used as a coating, and/or to form alternative articles.

For coating the rubber manufactured article, a correctly formulated paint coating based on an isocyanate resin is preferred. This resin should have an NCO content of 9.0% to 9.5% and preferably 9.3%.

### Example 1:

### Example of preferred isocyanate coating formulation:

The paint is manufactured according to the following formulation:

| | |
|---|---|
| a. Iso 136/41 | 99.0 kgs |
| b. Dabco T-12N | 0.3 kgs |
| c. Water | 0.7 kgs |

Iso 136/41 is supplied by Elastogram. Dabco T-12N is dibutyl tin dilaurate which is an organo tin catalyst. The above coating may be pigmented with between 3% and 6% pigment paste such as Stockmeir S024.22 supplied by Stockmeir, France. The coating may be applied by spray. For roller or brush application, water is not required in the formulation. This formulation was tested by exposing the coating to the following chemicals.

| *Chemical* | *Initial Surface Change after 10 weeks* |
|---|---|
| Water | None |
| 5% NaCl Soln | None |
| 5% NaOH Soln | None |
| 30% NaOH Soln | Blisters |
| 5% H₂SO₄ Soln | None |
| 50% H₂SO₄ Soln | Blisters |
| Petrol | None |
| Diesel | None |
| 3% Detergent Soln | None |
| Brake Fluid | None |
| Steering Fluid | Small Blister |

### Example 2:

### Example of formulation for encapsulation of article in a rubber crumb:

For encapsulating the article in a rubber crumb, an isocyanate resin is preferred in a modified RIM system.

This resin should have an NCO content of 9.0% to 9.5% and preferably 9.3%. A rubber crumb paste is manufactured according to the following formulation:

| | |
|---|---|
| a. Rubber crumb (particle size 1mm to 3mm) | 92.0 kgs |
| b. Iso 136/41 | 3.0 kgs |
| c. Stockmeir pigment paste | 5.0 kgs |

For use, the laminated rubber item is inserted into a two half steel mould. The rubber crumb paste is pumped in so as to completely fill the mould. The mould is heated to 140 degrees Celsius for 10 minutes. The encapsulated item is removed from the mould and allowed to cool. The chemical resistance of this system is the same as that using a paint-on coating.

If the article being manufactured is a resilient support post, then in order to protect the reflective element from damage or theft, the reflective element may be mechanically fixed to the post before the coating is applied. The reflective element may have a raised base to allow it to protrude from the coating surface.

It is also possible to manufacture a post having one or more flashing Light Emitting Diodes (LED) within its body. The LED may be solar powered, a small solar panel being mounted on the top of the post. Such posts would be particularly useful on motor racing circuits and on roadways, walkways within large industrial sites.

It is to be understood that while the articles of the present invention have been described, by way of example, in the form of a resilient support post, a kerbing element and a speed ramp, the articles can take any form such as, for instance, street furniture, pallets and other articles.

## Claims

1. An article produced from used vehicle tyres, the article comprising a plurality of layers, each layer comprising a section of tread and underlying carcass of a tyre, layers being connected together by connecting means and wherein a weather and abrasion resistant coating is applied to the article.

2. An article as claimed in claim 1 wherein the connecting means comprises an adhesive, preferably an anaerobic adhesive.

3. An article as claimed in claim 1 or claim 2, comprising resilient support post for use on a roadside, footpath or interior/ exterior walkway comprising a support body having a base section and a display section, the base section comprising means for use in securing the support in place, the display section mounting a display unit **characterized in that** the support body comprises a plurality of layers, each layer comprising a section of tread and underlying carcass of a tyre.

4. An article as claimed in any one of the preceding claims wherein the coating is based on an isocyanate resin; or an isocyanate resin with a polyester polyol or polyether polyol.

5. An article as claimed in any one of the preceding claims wherein the manufactured article is coated with a weather and abrasion resistant coating based on an isocyanate resin; or an isocyanate resin with a polyester polyol or polyether polyol.

6. An article as claimed in claim 5 wherein the polyol in the coating composition comprises polyester polyols or polyether polyols, used separately or blended.

7. An article as claimed in claim 5 wherein the isocyanate may comprise any one or more selected from the group: polymeric diphenylmethane-4-4 Diisocyanate, polyisocyanates, hexamethylene Diisocyanate, polymethylene polyphenyl isocyanate, m-phenylene Diisocyanate, p-phenylene Diisocyanate, 3,3-dimethyl -4-4 diphenyl Diisocyanate, 3,3-dimethoxy-4-4 biphenylene Diisocyanate, 2-2,4-4 tetramethyl-4-4 biphenylene Diisocyanate, 3,3-dimethyl-4-4 diphenylamine Diisocyanate, 4'4-diphenyl isopropylidene Diisocyanate, 1'5-naphthylene Diisocyanate and polymethylene polyphenyl isocyanate.

8. A method for manufacturing an article from a tyre, the tyre comprising a circumferential carcass having a tread overlaid thereon and a sidewall projecting orthogonally from each side edge of the carcass, the method comprising the steps of:
removing the sidewalls of the tyre;
cutting the remaining tread and carcass into one or more substantially rectangular sections, each having a tread side and a carcass side;
joining at least two substantially rectangular sections together in a layered manner;
connecting the sections together to form the article; and
applying a weather and abrasion resistant coating to the outer surface of the article.

9. A method as claimed in claim 8 wherein connecting the sections together is carried out by adhering the sections together using adhesive.

10. A method as claimed in claim 9 wherein the adhesive is an anaerobic adhesive.

11. A method as claimed in any one of claims 8 to 10 wherein the manufactured article is coated with a weather and abrasion resistant coating preferably based on an isocyanate resin; or an isocyanate resin with a polyester polyol or polyether polyol.

12. A method as claimed in claim 11 wherein the polyol in the coating composition comprises polyester polyols or polyether polyols, used separately or blended.

13. A method as claimed in claim 11 wherein the isocyanate may comprise any one or more selected from the group: polymeric diphenylmethane-4-4 Diisocyanate, polyisocyanates, hexamethylene Diisocyanate, polymethylene polyphenyl isocyanate, m-phenylene Diisocyanate, p-phenylene Diisocyanate, 3,3-dimethyl -4-4 diphenyl Diisocyanate, 3,3-dimethoxy-4-4 biphenylene Diisocyanate, 2-2,4-4 tetramethyl-4-4 biphenylene Diisocyanate, 3,3-dimethyl-4-4 diphenylamine Diisocyanate, 4'4-diphenyl isopropylidene Diisocyanate, 1'5-naphthylene Diisocyanate and polymethylene polyphenyl isocyanate.

14. A method as claimed in any one of claims 8 to 13 wherein the method is for producing a resilient support post and wherein the method further comprises the steps of:
forming a base section of the resilient support post such that it can be used in securing the support in place; and
affixing a display unit to the support.

15. A method as claimed in any one of the claims 8 to 13 wherein the method is for producing a kerbing element and wherein the kerbing element is produced in the precise dimensions of the existing kerbstones defined by European standard prEN1340..
